(19) Europäisches Patentamt / European Patent Office / Office européen des brevets

(11) **EP 4 242 748 A1**

(12) **EUROPEAN PATENT APPLICATION**

(43) Date of publication:
**13.09.2023 Bulletin 2023/37**

(21) Application number: **23158772.6**

(22) Date of filing: **27.02.2023**

(51) International Patent Classification (IPC):
$G03G\ 15/22$ (2006.01)     $G03G\ 9/097$ (2006.01)
$G03G\ 9/087$ (2006.01)     $B33Y\ 10/00$ (2015.01)
$B33Y\ 70/10$ (2020.01)

(52) Cooperative Patent Classification (CPC):
**G03G 15/224; B33Y 10/00; B33Y 70/10;
G03G 9/08704; G03G 9/08755; G03G 9/08788;
G03G 9/08795; G03G 9/097; G03G 9/09708;
G03G 9/09733**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.03.2022 JP 2022035346**

(71) Applicant: **Ricoh Company, Ltd.
Tokyo 143-8555 (JP)**

(72) Inventors:
• **KUMAKI, Yuki**
  **Tokyo 143-8555 (JP)**
• **YABE, Kenji**
  **Tokyo 143-8555 (JP)**
• **SAWADA, Toyoshi**
  **Tokyo 143-8555 (JP)**
• **SUZUKI, Kazumi**
  **Tokyo 143-8555 (JP)**

(74) Representative: **SSM Sandmair
Patentanwälte Rechtsanwalt
Partnerschaft mbB
Joseph-Wild-Straße 20
81829 München (DE)**

(54) **IMAGE FORMING APPARATUS AND IMAGE FORMING METHOD**

(57)     An image forming apparatus includes an electrostatic latent image bearer (1), an electrostatic latent image former (15, 30), a developing device (5), a transfer device (19), and a fixing device (20). The electrostatic latent image former (15, 30) forms an electrostatic latent image on the electrostatic latent image bearer (1). The developing device (5) develops the electrostatic latent image with a developer to form a toner image. The transfer device (19) transfers the toner image on a recording medium. The fixing device (20) fixes the toner image on the recording medium. The developer contains an adhesive medium and foamable particles.

FIG. 1

EP 4 242 748 A1

**Description**

BACKGROUND

Technical Field

Embodiments of the present disclosure relate to an image forming apparatus and an image forming method.

Related Art

Color image forming apparatus with an electrophotography system has been widely distributed, and the applications thereof correspondingly extends over a great variety; for example, some image forming apparatus fix to the surface of paper, a foamable toner containing a foaming agent such as a thermofoamable toner on a base material, and then expands (or foams) the foaming agent to form a three-dimensional color image, which differs from a regular planar image.

As an example of such image forming apparatus that forms a three-dimensional color image, an image forming apparatus has been proposed that forms a three-dimensional image using a developer formed by kneading a binder resin and internal-sized particles that are internally added to a binder resin and have a melting temperature of 180°C or higher, which is higher than that of a binder resin, at a lower temperature than melting temperatures of both components (see, e.g., Japanese Unexamined Patent Application Publication No. 2009-75400).

However, an image forming apparatus described in Japanese Unexamined Patent Application Publication No. 2009-75400 employs a developer formed by kneading a binder resin and internal-sized particles, and thus has a problem of failing to sufficiently improve in durability of an image and leading to a color image with light coloration.

SUMMARY

An object of the present disclosure is to provide an image forming apparatus that can form a three-dimensional image having a sufficient durability.

According to an aspect of the present disclosure, an image forming apparatus includes an electrostatic latent image bearer, an electrostatic latent image former, a developing device, a transfer device, and a fixing device. The electrostatic latent image former forms an electrostatic latent image on the electrostatic latent image bearer. The developing device develops the electrostatic latent image with a developer to form a toner image. The transfer device transfers the toner image on a recording medium. The fixing device fixes the toner image on the recording medium. The developer contains an adhesive medium and foamable particles.

According to another aspect of the present disclosure, an image forming method includes: forming an electrostatic latent image on an electrostatic latent image bearer; developing the electrostatic latent image with a developer and form a toner image; transferring the toner image on a recording medium; and fixing the toner image transferred on the recording medium. The developer contains an adhesive medium and foamable particles.

An aspect of the present disclosure can provide an image forming apparatus that can form a three-dimensional image having sufficient durability.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic configuration diagram of an image forming apparatus according to an embodiment of the present disclosure;
FIG. 2 is a chart illustrating measurement results of decrease rate of surface roughness;
FIG. 3 is a chart illustrating measurement results of color difference; and
FIG. 4 is a chart illustrating measurement results of decrease rate of surface roughness.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter some embodiments of the present disclosure will now be described in detail. The embodiments are not limited by the description below, and can be appropriately modified in the range not departing from the spirit of the present disclosure. In addition, the term "to" indicating a numerical range herein means numerical values described before and after are involved as lower and upper limits, unless otherwise stated.

To illustrate an image forming apparatus according to an embodiment, description will be made for a toner, a developer, and a toner set used in an image forming apparatus according to an embodiment.

<Toner>

The toner contains polyolefin as a binder resin (fixing resin). Preferably, the toner has an exothermic peak in the range of 40°C to 70°C at temperature dropping after first temperature rising by differential scanning calorimetry (DSC), and polyolefin has no exothermic peak at temperature dropping after first temperature rising by DSC and an exothermic peak in the range of 0°C to 30°C at second temperature rising.

The toner contains polyolefin, and has an exothermic peak appeared in the range of 40°C to 70°C at temperature dropping after first temperature rising by DSC of the toner, no exothermic peak appeared at temperature dropping after first temperature rising by DSC of polyolefin, and an exothermic peak appeared in the range of 0°C to 30°C at second temperature rising. This provides the toner with lower melting point and difficulty in crystallization, thus improving fixability of the toner to a plastic film.

The plastic film is a non-paper medium other than paper media, and examples of the plastic films include, in view of difference in properties of their material, polyethylene films, polypropylene films, polyethylene terephthalate films, vinyl chloride resin films, polystyrene films, acrylic films, polycarbonate films, polyphenylenesulfide films, fluororesin films, polyetheretherketone films, polyethersulfone films, aramid films, polyimide films, and triacetate films. The plastic film encompasses films surface-treated, such as surface-coated, with a different material.

The toner generates an exothermic peak at temperature dropping after first temperature rising by DSC at 40°C to 70°C, more preferably at 45°C to 70°C, and even preferably at 50°C to 70°C. When the toner has an exothermic peak generated at temperature dropping after first temperature rising by DSC at lower than 40°C, the toner is prone to form aggregation at transport of the toner and due to temperature change in storage environment of the toner. This easily causes solidification in a toner bottle and adhesion of the toner within a developing machine. Moreover, an imaging irregularity is prone to occur because of failure in supply due to toner clogging in a toner bottle and of toner adhesion within a developing machine. On the other hand, when the toner has an exothermic peak generated at temperature dropping after first temperature rising by DSC at above 70°C, the toner is prone to crystalize.

The toner contains a binder resin as described above, and may contain another component such as a colorant and a release agent, as appropriate.

Binder Resin

The binder resin contains polyolefin as described above, and may also be contain a binder resin other than polyolefin.

Polyolefin

The polyolefin is preferably maleate-modified polyolefin having a polypropylene block at least in a main chain.

Structure, Content, Melting Point, Weight Average Molecular Weight, and Maleate modification Rate of Maleate-modified Polyolefin Having Polypropylene Block in Main Chain

Maleate-modified polyolefin having a polypropylene block in a main chain is a derivative in which an end or a side chain of polyolefin having a polypropylene block in a main chain is modified with maleate.

The main chain is preferably a block copolymer containing any one or more of a polypropylene block, a polyethylene block, and a polybutene block.

The content of maleate-modified polyolefin having a polypropylene block in a main chain in the toner is preferably 2.1% by mass to 30.0% by mass, more preferably 3.0% by mass to 20.0% by mass, and even more preferably 5.0% by mass to 10.0% by mass. When the content is 2.1% or more by mass, the toner can be provided with sufficient fixability to a plastic film, particularly a plastic film having a flat, water-repellent surface. Meanwhile, when the content is 30.0% or less by mass, maleate-modified polyolefin having a polypropylene block in a main chain can be microdispersed in the toner at fixing, and reduced in an amount exposed to the surface, thus allowing maintenance of heat-resistant preservability. The content can be calculated from a calorific value at an exothermic peak appeared in the range of 40°C to 70°C at temperature dropping after first temperature rising by DSC of the toner. The toner having the content of 2.1% by mass to 30.0% by mass has an exothermic peak detected in the range of 40°C to 70°C at temperature dropping after first temperature rising by DSC measurement.

The melting point of maleate-modified polyolefin having a polypropylene block in a main chain is preferably 60°C to 100°C, more preferably 63°C to 95°C, even more preferably 65°C to 90°C. When the melting point is 60°C or higher, images formed of the toner can be prevented from adhesion to one another due to heat. When the melting point is 100°C or lower, the toner can be provided with sufficient low-temperature fixability to a plastic film, thus allowing fixing at low temperature. This can prevent occurrence of a curl of a plastic film at fixing.

The weight average molecular weight of maleate-modified polyolefin having a polypropylene block in a main chain is preferably 60000 to 100000, more preferably 65000 to 90000, and even more preferably 70000 to 80000. When the weight average molecular weight is 60000 or more, fixability to a plastic film can be provided. When the weight average molecular weight is 100000 or less, low melting point and low melt viscosity are provided, resulting in sufficient fixability to a plastic film.

The maleate modification rate of maleate-modified polyolefin having a polypropylene block in a main chain is preferably 0.5% by mass to 8.0% by mass, more preferably 1.0% by mass to 7.0% by mass, and even more preferably 3.0% by mass to 6.0% by mass. When the maleate modification rate falls in the preferable range described above, maleate-modified polyolefin having a polypropylene block in a main chain could exude to an interface between a film and the toner at toner melting, thus providing good fixability to a plastic film.

Particular examples of maleate-modified polyolefin having a polypropylene block in a main chain include TOYOTAC-L, TOYOTAC-KE, TOYOTAC-KH, and TOYOTAC-T available from TOYOBO Co., Ltd.

Method of Separating Maleate-modified Polyolefin Having Polypropylene Block in Main Chain from Toner

Isolation, qualitative analysis, and quantitative analysis for maleate-modified polyolefin having a polypropylene block in a main chain contained in the toner can be performed in various methods. For example, the toner can be analyzed in various methods such as spectrum analysis, elemental analysis, DSC measurement, and other chemical analyses as follows. When it is difficult to analyze the toner itself, the toner should be subject to Soxhlet extraction with a solvent to dissolve a binder resin such as tetrahydrofuran (THF) or toluene, followed by concentration of a filtrate with an evaporator, and then separation and a predetermined analysis of maleate-modified polyolefin having a polypropylene block in a main chain. Moreover, various analysis methods can be used such as analyses for a sample fractioned by GPC, and a sample fractionally-extracted with a single solvent or a mixed solvent. These analysis methods may be used singly, or in combination as appropriate.

Composition Analysis by GC-MS

Confirmation of presence and quantification of maleate-modified polyolefin having a polypropylene block in a main chain in the toner can be performed as the following procedures, devices, and conditions.

Processing of Samples

The toner is dispersed into chloroform and stirred twice around the clock. Then, the liquid dispersion is centrifuged, and a supernatant liquid is separately recovered. The recovered supernatant liquid is evaporated to be dried, and subjected to composition analysis by a gas chromatography-mass spectrometer (GC-MS). An example of measurement conditions by GC-MS is presented below. Then, a mixture derived by dropping about 1 $\mu$L of a methylating agent (20% tetramethyl ammonium hydroxide solution in methanol: TMAH) to about 1 mg of a sample is prepared as a sample.

Measurement Conditions

- Pyrolysis-gas chromatography-mass spectrometer (Py-GCMS) analyzer: QP2010, manufactured by Shimadzu Corporation

- Heating furnace: Py2020D, manufactured by Frontier Laboratories Ltd.
- Heating temperature: 320°C
- Column: Ultra ALLOY-5L = 30 m, I.D = 0.25 mm, Film = 0.25 $\mu$m
- Column temperature: 50°C (retention time: 1 min) followed by temperature rising (10°C/min) up to 340°C (retention time: 7 mins)
- Split ratio: 1:100
- Column flow rate: 1.0 mL/min
- Method of ionization: EI (70 eV)
- Measuring mode: scanning mode
- Detection data: NIST 20 MASS SPECTRAL LIB.

Composition Analysis by Nuclear Magnetic Resonance (NMR)

Confirmation of presence and quantification of maleate-modified polyolefin having a polypropylene block in a main chain in the toner can be performed as the following procedures, devices, and conditions.

Preparation of Sample

Toner is dispersed into chloroform and stirred twice around the clock. Then, the liquid dispersion is centrifuged, and a supernatant liquid is separately recovered. The recovered supernatant liquid is evaporated to be dried, and subjected as a sample for 1H-NMR and 13C-NMR to composition analysis by NMR. An example of preparing methods of a 1H-NMR sample, preparing methods of a 13C-NMR sample, and measurement conditions are presented below.

(1) Preparation of 1H-NMR sample: 1 mL of d8-toluene is added to 100 mg of a sample, warmed and dissolved with a drier, and subjected to 1H-NMR measurement. (2) Preparation of 13C-NMR sample: 1 mL of deuterated 1,2-dichlorotoluene is added to 100 mg of a sample, warmed and dissolved with a drier, and subjected to 13C-NMR measurement.

Measurement Conditions

- NMR apparatus (ECX-500, manufactured by JEOL Ltd.)
- Nucleus for measurement = 1H (500 MHz); measurement pulse file = single pulse dec. jxp (1H); 45° pulse; accumulation: 20000 times; relaxation delay: -4 secs; data point: 32K; offset: 100 ppm; observation width = 250 ppm, measurement temperature: 70°C.
- Nucleus for measurement = 13C (125 MHz); measurement pulse file = single pulse dec. jxp (13C); 45° pulse; accumulation: 64 times; relaxation delay: 5 secs; data point: 32K; observation width = 15 ppm, measurement temperature: 65°C.

Measurement Method of Weight Average Molecular Weight

The weight average molecular weight of the toner can be provided by measuring molecular weight distribution of a THF-soluble fraction with a gel permeation chromatography (GPC) measurement device. As a GPC measurement device, for example, GPC-150C (manufactured by Waters Corporation) can be used.

Measurement can be made by the following method using a column (SHODEX KF801 to KF807, manufactured by Showa Denko K. K.)

For example, a column is stabilized in a heat chamber at 40°C, and THF as a solvent is passed through the column at the temperature at a flow rate of 1 mL per minute.
Then, 0.05 g of a sample is sufficiently dissolved in 5 g of THF, then passed through a pretreatment filter (e.g., chromatodisk (pore size: 0.45 $\mu$m, manufactured by Kurabo Industries Ltd.)), and adjusted to have a final sample concentration of 0.05% by mass to 0.6% by mass. The weight average molecular weight Mw of a THF-soluble fraction contained in the THF sample solution can be measured by injecting 50 $\mu$L to 200 $\mu$L of the THF sample solution thus adjusted for a sample concentration into the column, separating the THF-soluble fraction contained in the THF sample solution, and then converting the fraction into a molecular weight at a detector.

Measurement of the weight average molecular weight of a THF-soluble fraction contained in a sample is made by calculating the molecular weight distribution belonging to a sample from a relation between logarithmic values of a calibration curve prepared by some kinds of monodispersed polystyrene standard samples and the number of counts.

As standard polystyrene samples for preparation of a calibration curve, polystyrene having a molecular weight of $6 \times 10^2$, $2.1 \times 10^2$, $4 \times 10^2$, $1.75 \times 10^4$, $5.1 \times 10^4$, $3.9 \times 10^5$, $8.6 \times 10^5$, $2 \times 10^6$, $4.48 \times 10^6$ and manufactured by Pressure Chemical Co. or Tosoh Corporation can be exemplarily used, and at least about 10 points of standard polystyrene samples are suitably used.

In addition, as a detector, a differential refractive index (RI) detector can be used.

Measurement Method of Thermal Characteristics Such as Melting Point by DSC

Measurement of thermal characteristics such as melting point by DSC can use an automated differential scanning calorimeter (e.g., DSC-60A Plus, manufactured by Shimadzu Corporation). For example, 5 mg of a sample is weighed in an aluminum pan and set up, cooled to -20°C, and then subjected to measurement with performing temperature rising and temperature dropping under the following temperature conditions. Melting point refers to an endothermic peak temperature at second temperature rising.

Temperature Conditions

- The first temperature rising is temperature rising from -20°C to 150°C at a temperature rising speed of 10°C/min.
- The second temperature dropping is temperature dropping from 150°C to -20°C at a temperature dropping speed of -10°C/min.
- The second temperature rising is temperature rising from -20°C to 150°C at a temperature rising speed of 10°C/min.

Polyester Resin

The binder resin preferably contain a polyester resin in addition to polyolefin. The polyester resin is preferably contained as a main component. The polyester resin can be fixed at low temperature with maintaining heat-resistant preservability compared to other binder resins in general, and thus can be suitably used as a binder resin of the toner.

The polyester resin can be provided by condensation polymerization of alcohol and carboxylic acid.

Alcohol has no particular limitation, and can be appropriately selected according to a purpose, and examples thereof can include glycols such as ethylene glycol, diene glycol, triethylene glycol, and propylene glycol; etherified bisphenols such as 1, 4-bis(hydroxymeta)cyclohexane and bisphenol A; and otherwise bivalent alcohol monomers, and tri- or more multivalent alcohol monomers.

Carboxylic acid has no particular limitation, and can be appropriately selected according to a purpose, and examples thereof can include bivalent organic acid monomers such as maleic acid, fumaric acid, phthalic acid, isophthalic acid, terephthalic acid, succinic acid, and malonic aid; and tri- or multivalent carboxylic acid monomers such as 1, 2, 4-benzene tricarboxylic acid, 1, 2, 5-benzene tricarboxylic acid, 1, 2, 4-cyclohexane tricarboxylic acid, 1, 2, 4-naphthalene tricarboxylic acid, 1, 2, 5-hexane tricarboxylic acid, 1, 3-dicarboxyl-2-methylenecarboxypropane, and 1, 2, 7, 8-octanetetracarboxylic acid.

The glass transition point (also referred to as glass transition temperature) Tg of the polyester resin is not particularly limited, can be appropriately selected according to a purpose, and is preferably 50°C to 75°C. In addition, the glass transition point Tg of the polyester resin can be measured by DSC.

Other binder resins

The toner can contain a binder resin component other than the polyester resin and polyolefin described above. Examples of other binder resins include known binder resins including styrene-based resins (homopolymer or copolymer including styrene or styrene substitute) such as styrene, poly-$\alpha$-stylstyrene, styrene-chlorostyrene copolymer, styrene-propylene copolymer, styrene-butadiene copolymer, styrene-vinyl chloride copolymer, styrene-vinyl acetate copolymer, styrene-maleic acid copolymer, styrene-acrylic acid ester copolymer, styrene-methacrylic acid ester copolymer, styrene-methyl $\alpha$-chloroacrylate copolymer, and styrene-acrylonitrile-acrylic acid ester copolymer; epoxy resins, vinyl chloride resins, rosin modified maleic acid resins, phenol resins, polyethylene resins, polypropylene resins, petroleum resins, polyurethane resins, ketone resins, ethylene-ethylacrylate copolymer, xylene resins, and polyvinyl butylate resins.

A production method of a binder resin is not particularly limited, and can use a known production method such as bulk polymerization, solution polymerization, emulsion polymerization, and suspension polymerization.

Other Components

The toner may contain other components. Examples of other components include a release agent, a colorant, a charging controller, an external additive, a flowability improver, a cleanability improver, and a magnetic material.

Release Agent

The release agent has no particular limitation, and can be appropriately selected according to a purpose. Examples of the release agent to be used can include aliphatic hydrocarbon such as liquid paraffin, microcrystalline wax, natural paraffin, synthetic paraffin, polyolefin wax, and partial oxide, fluoride, and chloride thereof; animal oils such as beef tallow and fish oil; plant oils such as palm oil, soybean oil, canola oil, rice bran wax, and carnauba wax; metal soaps including higher aliphatic alcohol-higher aliphatic acid such as montan wax, fatty acid amide, fatty acid bisamide, zinc stearate, calcium stearate, magnesium stearate, aluminum stearate, zinc oleate, zinc palmitate, magnesium palmitate, zinc myristate, zinc laurate, and zinc behenate; fatty acid ester, and polyvinylidene fluoride. These may be used singly or in combination of two or more kinds.

Among these components, at least ester wax such as fatty acid ester is preferably contained. When maleate-modified polyolefin having a polypropylene block in a main chain is contained in the toner, a larger content thereof potentially prevents, at fixing, separation of the toner from a fixing roller (or fixing belt) to cause paper jam. This failure can be suppressed by addition of ester wax as a release agent. Moreover, maleate-modified polyolefin having a polypropylene block in a main chain can microdisperse ester wax.

The content of ester wax in the toner is preferably 0.1% by mass to 8.0% by mass. When the content is 0.1% or more by mass, the toner can be separated from a fixing roller (or fixing belt) at fixing, thereby suppressing paper jam. Meanwhile, when the content is 8.0% or less by mass, the toner can be provided with sufficient fixability to a plastic film.

Colorant

A colorant has no particular limitation, and a colorant commonly used can be appropriately selected and used.

Black toner is preferably derived by mixing carbon black singly or as a main component and copper phthalocyanine and the like, and adjusting hue and lightness.

Cyan toner is preferably copper phthalocyanine that is Pigment Blue 15: 3, or a mixture of copper phthalocyanine and aluminum phthalocyanine.

Magenta toner can employ Pigment Red 53:1, Pigment Red 81, Pigment Red 122, Pigment Red 269, and the like. These can be used singly or in combination of two or more kinds.

Yellow toner can employ Pigment Yellow 74, Pigment Yellow 155, Pigment Yellow 180, Pigment Yellow 185, and the like. These can be used singly or in combination of two or more kinds. Among these, a mixture of Pigment Yellow 185 or Pigment Yellow 74 and Pigment Yellow 185 is preferable in view of saturation and preservability.

White pigment to be used can be derived by surface-treating titanium dioxide with silicon, zirconia, aluminum, polyol, or the like.

Green toner can employ Pigment Green 7 and the like, but needs attention in safety.

Blue toner can employ Pigment Blue 15:1, Pigment Violet 23, and the like.

The toner is preferably white or colorless (containing no colorant) in view of not diminishing coloration of the toner to be mounted. When the toner is used as an underlying layer (an image forming layer closest to a recording medium) over which an image layer of a color toner layer is formed, the color toner can be reduced in loss of coloration.

Charging Controller

The charging controller has no particular limitation, and can be appropriately selected according to a purpose, and examples thereof include modified substances by nigrosine and fatty acid metal salts, onium salts such as a phosphonium salt and lake pigments thereof, triphenylmethane dyes and lake pigments thereof, metal salts of higher fatty acid; diorgano-tin oxides such as dibutyl tin oxide, dioctyl tin oxide, and dicyclohexyl tin oxide; diorgano-tin borates such as dibutyl tin borate, dioctyl tin borate, and dicyclohexyl tin borate, organic metal complexes, chelate compound, monoazo metal complexes, acetylacetone metal complexes, aromatic hydroxycarboxylic acid- and aromatic dicarboxylic acid-based metal complexes, and quaternized ammonium salts. Other charging controller materials include aromatic hydroxycarboxylic acid, aromatic mono- and polycarboxylic acid, and metallic salts, anhydrides, and esters thereof, and phenol derivatives such as bisphenol. These may be used singly or in combination of two or more kinds.

When the charging controller is added to the toner, 0.1 mass parts to 10 mass parts relative to a binder resin is preferably added.

In addition, since the charging controller may cause coloration, the charging controller to be selected is preferably as transparent as possible except for use for black toner.

External Additive

As the external additive, inorganic microparticles or the like can be used.

Examples of inorganic microparticles can include silica, alumina, titanium oxide, barium titanate, magnesium titanate, calcium titanate, strontium titanate, zinc oxide, silica sand, clay, mica, wollastonite, diatomaceous earth, chromium oxide, cerium oxide, Bengara, antimony trioxide, magnesium oxide, zirconium oxide, barium sulfate, barium carbonate, calcium carbonate, silicon carbide, and silicon nitride. Among these, preferable are silica, alumina, and titanium oxide.

Inorganic microparticles to be used may be surface-treated with a hydrophobizing agent. Examples of a hydrophobizing agent as a preferable surface-treatment agent include a silane coupling agent, a silylation agent, a silane coupling agent having an alkyl fluoride group, an organic titanate-based coupling agent, and an aluminum-based coupling agent. Silicone oil can also be used as a hydrophobizing agent to provide a sufficient effect.

The mean particle diameter of primary particles of inorganic microparticles is preferably 5 nm to 500 nm, and more preferably 10 nm to 200 nm. When the mean particle diameter is 5 nm or more, aggregation of inorganic microparticles is reduced, thus allowing uniform dispersion of inorganic microparticles in the toner. When the mean particle diameter is 500 nm or less, a filler effect provides improved heat-resistant preservability.

Mean particle diameter herein refers to a value from particle diameters directly derived from a photo obtained by a transmission electron microscope, and it is preferable to observe at least 100 or more particles and use the mean of their major axis.

Flowability Improver

A flowability improver has not particular limitation and can be appropriately selected according to a purpose as long as it can be used for surface treatment, increase hydrophobicity, and prevent deterioration of rheological characteristics, charging characteristics, and the like even under high humidity, and examples thereof include a silane coupling agent, a silylation agent, a silane coupling agent having an alkyl fluoride group, an organic titanate-based coupling agent, and an aluminum-based coupling agent, silicone oil, and a modified silicone oil. Silica and titanium oxide are particularly preferably surface-treated with such a flowability improver, and used as hydrophobic silica and hydrophobic titanium oxide.

Cleanability Improver

The cleanability improver has no limitation if added to the toner in order to remove a developer remaining on a photoconductor, a primary transfer medium, and the like after transfer, and can be appropriately selected according to a purpose. Examples of the cleanability improver include fatty acid metal salts such as zinc stearate, calcium stearate, and stearic acid; and polymer microparticles produced by soap-free emulsion polymerization such as polymethylmethacrylate microparticles and polystyrene microparticles. The polymer microparticles have preferably relatively narrow particle size distribution, and favorably a volume mean particle diameter of 0.01 $\mu$m to 1 $\mu$m.

Magnetic Material

The magnetic material has no particular limitation, and can be appropriately selected according to a purpose, and examples thereof include iron powder, magnetite, and ferrite. Among these, white one is preferable in view of color tone.

Production Method of Toner

An example of a production method of the toner will be described. First, a binder resin, a colorant, a release agent, and further as appropriate, a charging controller and the like are mixed using a mixer such as a Henschel mixer or a super mixer, to provide a mixture of the binder resin (mixing step).

Then, the mixture is melt-kneaded using a hot melt kneader such as a heating roll, a kneader, or an extruder to provide a kneaded material of the mixture (melt-kneading step).

Then, the kneaded material is cooled and solidified, thereby providing a solidified material of the kneaded material (solidification step). A cooling method and a solidification method are not particularly limited, and any method can be appropriately used.

Then, the solidified material is finely pulverized to provide a pulverized material of the solidified material (fine pulverization step). The solidified material can be pulverized with a known pulverize method. Examples of pulverize methods to be used can include a jet mill system that makes toner held in high-speed airflow and pulverizes a solidified material with energy of collision of toner against a collision plate, an inter-particle collision system that collides toner masses to one another in airflow, and a mechanical pulverization method that supplies to pulverize toner between a high-speed rotating rotor and a narrow gap.

Then, the pulverized material is classified to recover a pulverized material having a predetermined volume mean particle diameter. This can provide the toner (classification step). A classification method is not particularly limited, and can appropriately use any method.

The toner can also be produced with a dissolution-suspension method. When the toner is produced with a dissolution-suspension method, toner materials such as a binder resin, a colorant, a release agent, and further as appropriate, a charging controller are dissolved or dispersed in an organic solvent to provide an oil phase, which is then dispersed into an aqueous medium (aqueous phase) to induce reaction of the binder resin. This provides a dispersion liquid including a prepolymer-containing dispersion (oil drop) where toner materials are emulsified or dispersed. Subsequently, the dispersion liquid is subjected to removal of the organic solvent, filtration, washing, and drying, and further as appropriate, classification and the like, thereby producing base particles of the toner. The base particles thus obtained with a dissolution-suspension methods is subjected to granulation, thereby providing the toner.

The organic solvent has no particular limitation, can be appropriately selected according to a purpose, and is preferably an organic solvent having a boiling point of less than 150°C in view of easy removability.

An organic solvent having a boiling point of less than 150°C has no particular limitation and can be appropriately selected according to a purpose, and example thereof include toluene, xylene, benzene, carbon tetrachloride, methylene chloride, 1, 2-dichloroethane, 1, 1, 2-trichloroethane, trichloroethylene, chloroform, monochlorobenzene, dichloroethylidene, methyl acetate, ethyl acetate, methylethylketone, and methyl isobutyl ketone. These may be used singly or in combination of two or more kinds.

Among these, preferable is ethyl acetate, toluene, xylene, benzene, methylene chloride, 1,2-dichloroethane, chloroform, carbon tetrachloride, etc., and more preferable is ethyl acetate.

The aqueous medium has no particular limitation and can be appropriately selected according to a purpose, and examples thereof include water, a solvent miscible with water, and a mixture thereof. These may be used singly or in combination of two or more kinds. Among these, water is preferable.

A solvent miscible with water can be appropriately selected according to a purpose, and examples thereof include alcohol, lower ketones, dimethylformamide, tetrahydrofuran, and CELLOSOLVEs. Alcohol has no particular limitation and can be appropriately selected according to a purpose, and examples thereof include methanol, isopropanol, and ethylene glycol. Lower ketones can be appropriately selected according to a purpose, and examples thereof include acetone and methylethylketone.

A method of removing an organic solvent from a dispersion liquid has no particular limitation and can be appropriately selected according to a purpose, and examples thereof include a method of gradually rising temperature of the whole reaction system to evaporate an organic solvent in an oil drop, and a method of spraying a dispersion liquid in dry atmosphere to remove an organic solvent in an oil drop.

Classification may be performed by removing a microparticle part in a liquid phase using a cyclone, a decanter, or centrifugation, or by drying followed by classification operation.

Thus, the toner contains polyolefin, and the toner has an exothermic peak in the range of 40°C to 70°C at temperature dropping after first temperature rising by DSC, and that polyolefin has no exothermic peak at temperature dropping after first temperature rising by DSC and an exothermic peak in the range of 0°C to 30°C at second temperature rising. The toner has low melting point and can be made difficult to crystallize, and thus upon attaching to an adherend such as a printing paper sheet or a plastic film, can have improved adhesiveness to the adherend and thereby increase in fixability to the adherend. Therefore, the toner can have good fixability to an adherend and image robustness.

Moreover, the toner has low melting point, and thus can prevent an adherend from heating to a higher temperature than necessary at fixing to the adherend, and thereby inhibit curling in the adherend.

Furthermore, the toner has low melting point, can be made difficult to crystallize, and thus can have good heat-resistant preservation stability. Heat-resistant preservation stability can be assessed from an amount of aggregation generated in the toner after storage of the toner under a hot and humid environment (e.g., 40°C, 70RH%) for a long duration (e.g., 14 days).

Use of the toner allows maintenance of fixing to an adherend, and thus a layer formed of the toner can be used as an underlying layer directly contacting an adherend. An image layer formed of a color toner is disposed on the underlying layer, thereby allowing good fixing of the image layer to an adherend via the underlying layer. The underlying layer formed with the toner can also have moderate flexibility, and thus even in a medium as easily deformable as an adherend such as a printing paper sheet and a plastic film, the underlying layer can deform and easily follow the adherend. Furthermore, easy follow to motion of an adherend by the underlying layer formed with the toner allows prevention of release or the like of the underlying layer from the adherend. Thus, the image layer disposed on the surface of the underlying layer can be less likely to be affected from color of the surface of an adherend, thereby preventing loss of color reproducibility and color development intended to be exerted in the image layer. Accordingly, use of the toner allows not only formation of an image having good color development on the surface of an adherend, but also stable maintenance of an image formed on the surface of an adherend.

The toner has high adhesiveness to an adherend as described above, and thus can be suitably used as an adhesive medium that adheres an adherend to an image layer formed of a color toner containing foamable particles or a colorant.

The toner can also be used as a colorless toner (transparent toner) when containing no colorant, and can be used as a white toner when containing a colorant of a white pigment.

<Developer>

The developer contains the toner and foamable particles, and can contain, as required, other components appropriately selected such as a carrier. This allows formation of an adhesive medium layer as an underlying layer having good fixability, on the surface of an adherend.

Foamable Particles

The foamable particles can employ a foamable toner. As the foamable toner, a common therofoamable toner or the like can be used.

A thermofoamable toner is microparticles containing a binder resin, a foaming agent, and an infrared absorbent, in which the foaming agent is preferably not substantially exposed on the surface of toner particles. Use of a thermofoamable toner having a foaming agent substantially unexposed on the surface not only provides high thermal expandability but also allows good maintenance of adhesiveness to a recording medium and charging stability.

The binder resin in the foamable toner has no particular limitation, and a resin commonly used as a binder resin for toners can be used. Particular examples thereof include a polyester resin, a styrene resin, an acrylic resin, a styrene-acrylic resin, a silicone resin, an epoxy resin, a diene-based resin, a phenol resin, and an ethylene-vinyl acetate resin, and preferable is a polyester resin.

The foaming agent has no particular limitation, and any of the agents can be used if thermally expandable in volume. The foaming agent may also be solid or liquid in normal temperature. Furthermore, the foaming agent is not limited to a material formed of a single substance, and may be a material formed of a plurality of substances, a functional material such as microcapsule particles, or the like. The foaming temperature of the foaming agent has a preferred range varying corresponding to a device used for formation of a three-dimensional image; when a three-dimensional image is formed by a regular image forming apparatus that forms a toner image build up with non-thermofoamable colored toner (second toner, described later) or the like, the temperature is preferably not more than a fixing temperature required for heat fixing of the toner image.

The infrared absorbent to be used preferably has no optical absorption property in a visible light range of 400 nm to 700 nm in wavelength providing visibility to the naked eye, and has an optical absorption property in a non-visible range of 700 nm or more in wavelength. As an infrared absorbent having an optical absorption property in the non-visible range, CuO-doped glass powder, a composite polymer containing a Cu ion-induced polymer, or the like can be particularly used. Note that use of an infrared absorbent having an optical absorption property in a visible light range causes failure of loss of color development in a colored toner image, and thus is not appropriate.

The thermofoamable toner is produced by a production method including, e.g., dissolving or dispersing at least a binder resin, a foaming agent, and an infrared absorbent in a solvent to provide an oil phase, which is then emulsified and dispersed in an aqueous phase to produce particles formed of the oil phase; and removing the solvent from the particles. Alternatively, the thermofoamable toner may be produced by a production method including subjecting a binder resin monomer component dissolving or dispersing at least a foaming agent and an infrared absorbent to suspension polymerization in an aqueous phase.

The proportion of content of the infrared absorbent in the thermofoamable toner can be set freely, and is, e.g., a proportion of 0.5% by mass to 90% by mass relative to the whole of the thermofoamable toner.

As the foamable particles, thermal expandable particles derived by encapsulating a foaming agent in a shell made of a thermal plastic resin can also be used. Examples of a resin used for the shell for the thermal expandable particles include an acrylic resin and an acrylonitrile resin. In addition, the mean particle diameter of the thermal expandable particles is preferably 10 μm to 50 μm, and more preferably 15 μm to 35 μm in an unfoamed form. As foamable particles, DAIFORM manufactured by Kureha Corporation, ADVANCEL EM manufactured by Sekisui Chemical Co., Ltd. or the like can be particularly used.

When the foamable particles and the toner are mixed, 0.5% by mass to 10.0% by mass of the foamable particle relative to the toner is preferably mixed, and 2% by mass to 5% by mass is more preferably mixed.

The developer may be a monocomponent developer or a two-component developer, but is preferably a two-component developer in view of improving life-span if used for a high-speed printer or the like corresponding to improvement in recent information processing speed.

In use of the toner as a monocomponent developer, even consumption and supply of the toner leads to less variation in the particle diameter of the toner, less filming of the toner onto a developing roller, less fusion of the toner to a member such as a blade for forming the toner into a thin layer, and further, good, stable developability and images even in long-term stirring in a developing device.

In use for a two-component developer, the developer can be mixed with a carrier and used as a developer. In use of the toner as a two-component developer, even long-term consumption and supply of the toner leads to less variation in the particle diameter of the toner, and further, good, stable developability and images even in long-term stirring in a developing device.

The content of the carrier in the two-component developer can be appropriately selected according to a purpose, and is preferably 90 mass parts to 98 mass parts, and more preferably 93 mass parts to 97 mass parts relative to 100 mass parts of the two-component developer.

The developer can be suitably used for image formation by various known electrophotography such as magnetic monocomponent developing, non-magnetic monocomponent developing, and two-component developing.

Carrier

As the carrier, magnetic microparticles can be used. Examples of the magnetic microparticles to be used can include particles of spinel ferrite such as magnetite and gamma iron oxide; spinel ferrite containing one type or two or more types of metals other than iron (Mn, Ni, Zn, Mg, Cu, etc.), magnetoplumbite-type ferrite such as barium ferrite; and iron, alloys, and the like having an oxidized layer on the surface. In view of chemical stability, spinel ferrite such as magnetite and gamma iron oxide, and magnetoplumbite-type ferrite such as barium ferrite are preferably used. In particular, preferred examples include MFL-35S, MFL-35HS (manufactured by Powdertech Co., Ltd.), DFC-400M, DFC-410M, and SM-350NV (manufactured by Dowa IP Creation Co., Ltd.)

In particular, in need of high magnetization as a carrier, microparticles of a ferromagnet such as iron is preferably used as a carrier.

The shape of the carrier may be granular, globular, or acicular.

Appropriate selection of the type and content of the carrier allows use of a resin carrier having desired magnetization. The magnetic property of the resin carrier at that time is preferably 30 emu/g to 150 emu/g in magnetization intensity in 1,000 oersted.

Such a resin carrier can be produced by spraying a melt-kneaded material of a carrier and an insulating binder resin with a spray drier, or can be obtained by reacting and curing a monomer or a prepolymer in the presence of a carrier in an aqueous medium, thereby producing a resin carrier containing a carrier dispersed in a condensed binder.

Charging can be controlled by adhering positive-charging or negative-charging microparticles or conductive microparticles, applying coating with a resin, or the like on the surface of the carrier.

As a coating material (resin) of the surface, a silicone resin, an acrylic resin, an epoxy resin, and a fluorine-based resin can be used. Coating can be made with further containing positive-charging or negative-charging microparticles or conductive microparticles, and in particular, preferable is a silicone resin and an acrylic resin.

The weight ratio of the carrier in the developer stored in a developing device is preferably 85% by mass to less than 98% by mass. When the weight ratio is 85wt% or more and less than 98% by mass, scattering of the toner from a developing device is reduced easily, thereby suppressing generation of a defective image. Moreover, it is also possible to prevent excessive increase in the amount of charging of an electrophotography developing toner, and shortage of the amount of supply of an electrophotography developing toner, thus providing decrease in frequency of generation of a defective image due to reduced image density.

<Toner Set>

The toner set can have the toner described above, and a color toner containing a binder resin, and a colorant.

The color toner has no particular limitation, and a known color toner can be appropriately selected according to an object. The binder resin has no particular limitation, can be appropriately selected according to a purpose, and can be, e.g., the same as the binder resin contained in the toner. The colorant has no particular limitation, and the colorant described above can be selected appropriately.

<Image Forming Apparatus>

Next, description will be made for an image forming apparatus according to an embodiment. The image forming apparatus according to an embodiment includes an electrostatic latent image bearer, an electrostatic latent image forming device to form an electrostatic latent image on the electrostatic latent image bearer, and a developing device to develop the electrostatic latent image formed on the electrostatic image bearer with a toner or a toner-containing developer and form a toner image, and can further have other configurations as appropriate.

In a developer containing a toner, an adhesive medium and foamable particles are preferably not kneaded but mixed with each remaining present independently.

The image forming apparatus according to an embodiment more preferably include a transfer device to transfer a toner image onto a recording medium, and a fixing device to fix a transfer image transferred onto the recording medium, in addition to the electrostatic latent image bearer, the electrostatic latent image forming device, and the developing device as described above.

In the developing device, a toner according to an embodiment is used. Preferably, a toner image may be formed using a developer that contains the toner according to an embodiment and further contains another component such as a carrier as appropriate.

Electrostatic Latent Image Bearer

The material, shape, structure, size, and the like of the electrostatic latent image bearer (hereinafter sometimes referred to as "electrophotography photoconductor" or "photoconductor") are not particularly limited, and can be appropriately selected from known objects. Examples of the material of the electrostatic latent image bearer include inorganic photoconductors such as amorphous silicon and selenium, and organic photoconductors (OPCs) such as polysilane and phthalopolymethine.

The shape of the electrostatic latent image bearer is not particularly limited, can be appropriately selected according to a purpose, and is preferably cylindrical. The outer diameter of the electrostatic latent image bearer with a cylindrical shape is not particularly limited, can be appropriately selected according to a purpose, and is preferably 3 mm to 100 mm, more preferably 5 mm to 50 mm, and particularly preferably 10 mm to 30 mm.

Electrostatic Latent Image forming device

The electrostatic latent image forming device has no particular limitation if being a means for forming an electrostatic latent image on an electrostatic latent image bearer, and can be appropriately selected according to a purpose. The electrostatic latent image forming device includes, e.g., a charging apparatus (charging device) that charges uniformly the surface of the electrostatic latent image bearer, and an exposure apparatus (exposure device) that image-wise exposes the surface of the electrostatic latent image bearer.

A charging device has no particular limitation, and can be appropriately selected according to a purpose, and examples thereof include a contact charging device including a conductive or semiconductive roll, brush, film, rubber blade or the like, and a non-contact charging device using corona discharge of a corotron, scorotron, or the like.

The shape of the charging device may have any form such as a magnetic brush form or a fur brush form, in addition to a roller form, and can be selected according to the specification, form, and the like of an image forming apparatus.

Preferably, the charging device is disposed in contact or non-contact with the electrostatic latent image bearer, and charges the surface of the electrostatic latent image bearer by applying superimposed direct-current and alternating-current voltages. Moreover, preferably, the charging device is a charging roller disposed close to and in non-contact with the electrostatic latent image bearer via a gap tape, and charges the surface of the electrostatic latent image bearer by applying superimposed direct-current and alternating-current voltages to a charging roller.

The charging device is not limited to a contact charging device, but a contact charging apparatus is preferably used in view of obtaining an image forming apparatus where a charging device generates a reduced amount of ozone.

The exposure device has no particular limitation if enabling image-wise exposure as intended to form on the surface of the electrostatic latent image bearer charged with a charging device, can be appropriately selected according to a purpose, and examples thereof include various exposure devices such as a copying optical system, a rod lens array system, a laser optical system, and a liquid crystal shutter optical system.

A light source used for the exposure device has no particular limitation and can be appropriately selected according to a purpose, examples thereof include light-emitting objects in general such as a fluorescent light, a tungsten lamp, a halogen lamp, a mercury light, a sodium light, a light emitting diode (LED), a semiconductor laser (LD), and an electroluminescence (EL).

Moreover, to irradiate light in a desired wavelength range, various filters can also be used such as a sharp-cut filter, a band-pass filter, a near-infrared-cut filter, a dichroic filter, an interference filter, and a color temperature conversion filter.

In addition, a backlight system may be employed which perform image-wise exposure from the back side of the electrostatic latent image bearer.

Developing device

The developing device has no particular limitation if enabling development of the electrostatic latent image formed on the electrostatic latent image bearer to form a toner image, and can be appropriately selected according to a purpose. The developing device to be suitably uses can include, e.g., a developing device that stores a toner, freely applies the toner to the electrostatic latent image in a contact or non-contact manner, and includes a toner-containing container.

The developing device may be a monochrome developing device or a polychrome developing device. The developing device is preferably a developing device having a stirring device that stirs toner with friction to provide charge, a magnetic field generator fixed inside, and a developer bearer that holds a toner-containing developer on the surface and freely rotates.

Four developing devices can be arranged. The developing devices includes a first toner formed of the toner described above, and a second toner formed of color toners of cyan, magenta, and yellow. The toner according to an embodiment is preferably colorless or white, and more preferably colorless. Additionally, the developing device may have a part of color toners of cyan, magenta, and yellow set as the first toner, which is the toner according to an embodiment.

Transfer device

The transfer device is preferably an aspect having a primary transfer device that transfers a toner image onto an intermediate transfer body to form a combined transfer image, and a secondary transfer device that transfers the combined transfer image onto a recording medium. The intermediate transfer body has no particular limitation, and can be appropriately selected from known transfer bodies corresponding to a purpose, and suitable examples thereof include a transfer belt.

The transfer device (primary transfer unit and secondary transfer device) preferably has at least a transfer device that releases and charges a toner image formed on an electrostatic latent image bearer (photoconductor) to a recording medium side. The transfer device may be one or two or more.

Examples of the transfer device include a corona transfer device with corona discharge, a transfer belt, a transfer roller, a pressure transfer roller, and an adhesive transfer device.

In addition, the recording medium is representatively plain paper, but has no limitation if freely transferring a developed, unfixed image, can be appropriately selected according to a purpose, and can be use a PET base for OHP or the like.

Fixing device

The fixing device has no particular limitation, can be appropriately selected according to a purpose, and is suitably a known heating pressure device. Examples of the heating pressure device include a combination of a heating roller and a press roller, and a combination of a heating roller, a press roller, and an endless belt.

The fixing device is preferably a heating pressure device that has a heating body including a heating element, a film in contact with the heating body, and a pressure member pressed against the heating body via the film, and can pass and heat fix a recording medium forming an unfixed image, between the film and the pressure member.

Heating in the heating pressure device is usually preferably performed at 80°C to 200°C.

Surface pressure in the heating pressure device is not particularly limited, can be appropriately selected according to a purpose, and is preferably 10 N/cm$^2$ to 80 N/cm$^2$.

In the embodiment, a known optical fixing device or the like may be used with or instead of a fixing device according to a purpose.

Others

An image forming apparatus according to an embodiment can include other devices such as an electric neutralizer, a recycle device, and a controller.

Electric Neutralizer

The electric neutralizer has not particular limitation, but is required to apply neutralization bias to an electrostatic latent image bearer. The electric neutralizer can be appropriately selected from known electric neutralizers, and is suitably exemplified by a neutralization lamp.

Cleaner

The cleaner is required to remove a toner remaining on an electrostatic latent image bearer, and can be appropriately selected from known cleaners. Examples of the cleaner include a magnetic brush cleaner, an electrostatic brush cleaner, a magnetic roller cleaner, a blade cleaner, a brush cleaner, and a web cleaner.
The image forming apparatus according to an embodiment can have a cleaner, thereby improving cleanability. In other words, control of attachment between toner particles allows control of flowability of a toner, and thus improvement in cleanability. Moreover, control of characteristics of deteriorated toner allows maintenance of good cleaning quality even under severe conditions such as enhanced life-span and high temperature and humidity. Furthermore, since an external additive can be sufficiently released from a toner on a photoconductor, formation of a sedimentary layer (dam layer) of an external additive in a cleaning blade nip part can achieve high cleanability.

Recycle Device

The recycle device has no particular limitation, and is exemplified by a known conveyor.

Controller

The controller can control motion of each of the parts described above. The controller has no particular limitation if controlling each of the parts described above, and can be appropriately selected according to a purpose, and examples thereof include a control device such as a sequencer and a computer.
The image forming apparatus according to an embodiment preferably uses the developing device, the transfer device, and the fixing device described above to stack an adhesive medium layer containing a first toner of an adhesive medium, and an image layer containing a second toner of a color toner used independently from foamable particles, onto a recording medium in accordance with the following first order of image formation from the recording medium side. First order of image formation: in order of an adhesive medium layer and an image layer.
Meanwhile, the image forming apparatus according to an embodiment preferably uses the developing device, the transfer device, and the fixing device described above to stack an adhesive medium layer containing a first toner of an adhesive medium, a foamable particle layer containing foamable particles, and an image layer containing a second toner of a color toner used independently from foamable particles, onto a recording medium in accordance with the following second order of image formation from the recording medium side. Second order of image formation: in order of an adhesive medium layer, a foamable particle layer, and an image layer.
The image forming apparatus according to an embodiment can use the toner according to an embodiment to perform image formation, and thus produces good fixability to a plastic film, reduces power consumption, and stably provides a high-resolution image.

<Image Forming Method>

An image forming method according to an embodiment includes: an electrostatic latent image formation step to form an electrostatic latent image on an electrostatic latent image bearer, and a developing step to develop the electrostatic latent image with a toner or a toner-containing developer and form a toner image, and as appropriate, further includes other steps, and uses an adhesive medium and foamable particles for the developer. The image forming method can be suitably performed with the image forming apparatus described above; the electrostatic latent image formation step can be suitably performed with the electrostatic latent image forming device described above; the developing step can be suitably performed with the developing device described above; and the other steps can be suitably performed with the other devices described above.
Moreover, the image forming method according to an embodiment more preferably includes a transfer step to transfer the toner image to a recording medium, and a fixing step to fix a transferred image transferred onto the surface of the recording medium as described above, in addition to the electrostatic latent image formation step and developing step.
In the developing step, the toner according to an embodiment is used. Preferably, a toner image may be formed by containing the toner according to an embodiment and further as appropriate, using a developer containing other components such as a carrier.
The electrostatic latent image formation step is a step to form an electrostatic latent image on an electrostatic latent image bearer, and includes a charging step to charge the surface of an electrostatic latent image bearer, and an exposure step to expose the charged surface of the electrostatic latent image bearer to form an electrostatic latent image. Charging can be performed by, e.g., applying voltage to the surface of the electrostatic latent image bearer with a charging device. Exposure can be performed by, e.g., image-wise exposing the surface of the electrostatic latent image bearer with the exposure device described above. Formation of an electrostatic latent image can be performed by, e.g., charging uniformly the surface of the electrostatic latent image bearer, followed by image-wise exposure, and can be conducted by an electrostatic latent image forming device.

The developing step is a step to serially develop an electrostatic latent image with a plurality of color toners to form a toner image. Formation of a toner image can be performed by, e.g., developing an electrostatic latent image with the toner described above, and conducted by a developing device.

Within a developing device, for example, a toner and a carrier are mixed with stirring, and the toner is charged by friction at that time, retained on the surface of a rotating magnet roller with standing like ear emergence to form a magnetic brush. Since the magnet roller is located close to an electrostatic latent image bearer (photoconductor), a part of the toner included in a magnetic brush formed on the surface of the magnet roller transfers to the surface of the electrostatic latent image bearer (photoconductor) by electrically attracting force. Consequently, the electrostatic latent image is developed by the toner to form a toner image by the toner on the surface of the electrostatic latent image bearer (photoconductor).

The transfer step is a step to transfer a toner image to a recording medium. The transfer step is preferably an aspect where an intermediate transfer body is used to primarily transfer a toner image onto an intermediate transfer body, and then secondarily transfer the toner image to the recording medium. The transfer step is more preferably an aspect including a primary transfer step to use two or more coloring toners, preferably full color toners to transfer a toner image onto an intermediate transfer body to form a combined transfer image, and a secondary transfer step to transfer the combined transfer image onto a recording medium. Transfer of a toner image can be performed by, e.g., charging an electrostatic latent image bearer (photoconductor) using a transfer charging device, and can be conducted by a transfer device.

The fixing step is a step to fix a toner image transferred to a recording medium using a fixing device, may be performed at every transfer to a recording medium for each coloring developer, or at a time for all coloring developers forming a stack.

The image forming method according to an embodiment may stack an adhesive medium layer containing a first toner of an adhesive medium, and an image layer containing a second toner of a color toner used independently from foamable particles, onto a recording medium in accordance with the following first order of image formation from the recording medium side. First order of image formation: in order of an adhesive medium layer and an image layer.

Meanwhile, the image forming method according to an embodiment may stack an adhesive medium layer containing a first toner of an adhesive medium, a foamable particle layer containing foamable particles, and an image layer containing a second toner of a color toner used independently from foamable particles, onto a recording medium in accordance with the following second order of image formation from the recording medium side. Second order of image formation: in order of an adhesive medium layer, a foamable particle layer, and an image layer.

The image forming method according to an embodiment can include other steps further appropriately selected as required, such as a neutralization step, a cleaning step, and a recycle step.

The neutralization step is a step to perform neutralization by applying neutralization bias to an electrostatic latent image bearer, and can be suitably conducted by an electric neutralizer.

The cleaning step is a step to remove the above-described toner remaining on an electrostatic latent image bearer, and can be suitably conducted by a cleaner.

The recycle step is a step to recycle a toner removed by the cleaning step to a developing device, and can be suitably conducted by a recycle device.

The image forming method according to an embodiment can use the toner according to an embodiment to perform image formation, and thus produces good fixability to a plastic film, reduces power consumption, and stably provides a high-resolution image.

Aspect of Image Forming Apparatus

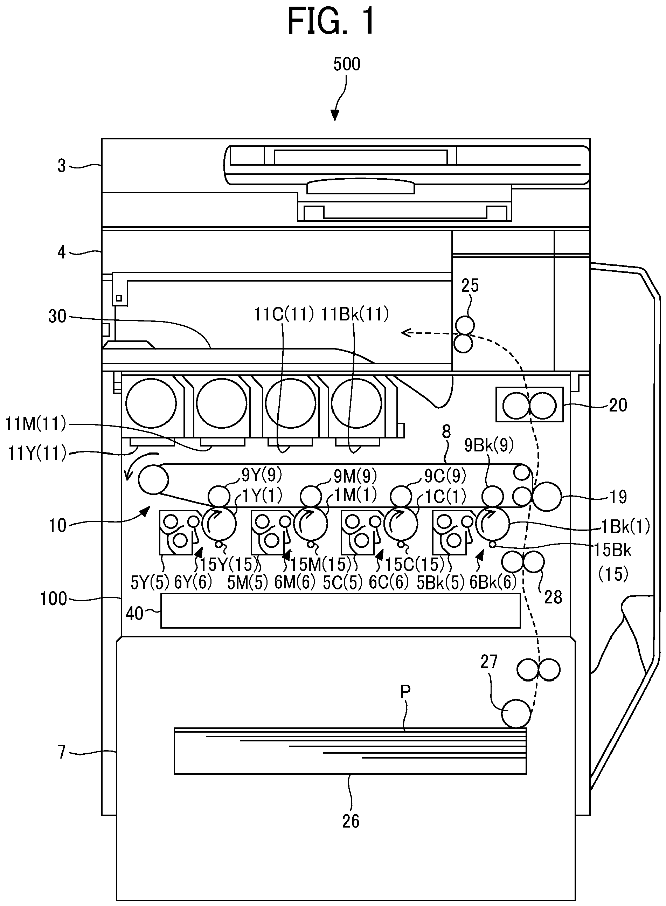

Next, an aspect of the image forming apparatus according to an embodiment of the present disclosure is described with reference to FIG. 1. FIG. 1 illustrates a tandem color copier serving as an image forming apparatus according to an embodiment of the present disclosure. FIG. 1 is a schematic configuration diagram depicting an image forming apparatus according to an embodiment. In FIG. 1, a toner is colorless, and a developing device and a primary transfer roller of the toner are omitted.

As depicted in FIG. 1, a tandem color copier (hereinafter referred to as copier 500) include a document reader 4 and a document feeder 3 in the upper part of a printer unit 100 as a body of an image forming apparatus, and a sheet feeder 7 in the lower part of the printer unit 100. The document feeder 3 conveys a document to the document reader 4, and the document reader 4 reads image information of the conveyed document. The sheet feeder 7 includes a sheet feeding cassette 26 to store a transfer sheet P as a recording medium, and a sheet feeding roller 27 to send the transfer sheet P in the sheet feeding cassette 26 toward the printer unit 100. A dashed-dotted line in FIG. 1 indicates a conveying path of the transfer sheet P in the copier 500.

The upper part of the printer unit 100 is a sheet ejection tray 30 where the transfer sheet P forming an output image is loaded. The printer unit 100 includes four image forming units 6 (6Y, 6M, 6C, and 6Bk) as image forming devices that form toner images of respective colors (yellow (Y), magenta (M), cyan (C), black (Bk)), and an intermediate transfer unit 10. Each of the image forming units 6 (6Y, 6M, 6C, and 6Bk) includes a drum-shaped photoconductor 1 (1Y, 1M, 1C, or 1Bk) as an image bearer or a latent image bearer on which each colored toner image is formed, a charger 15 (15Y, 15M, 15C, and 15K) that charges the surface of corresponding one of the photoconductors 1, an exposure device 40 that emits the charged surface of each photoconductor 1 with light to form an electrostatic latent image on the surface of each photoconductor 1, and a developing device 5 (5Y, 5M, 5C, or 5Bk) that develops the electrostatic latent image formed on the surface of each photoconductor 1 (1Y, 1M, 1C, and 1Bk). The chargers 15 and the exposure device 40 are an example of an electrostatic latent image former.

The intermediate transfer unit 10 includes an intermediate transfer belt 8, primary transfer bias rollers 9 (9Y, 9M, 9C, and 9Bk), and the like.

The intermediate transfer belt 8 is an intermediate transfer body where each colored toner image formed on the surface of each photoconductor 1 (1Y, 1M, 1C, or 1Bk) is stacked and transferred to form a color toner image on the surface.

Primary transfer bias rollers 9 (9Y, 9M, 9C, and 9Bk) are primary transfer devices that transfer color toner images formed on the respective surfaces of the photoconductors 1 (1Y, 1M, 1C, and 1Bk) to the intermediate transfer belt 8.

The printer unit 100 includes a secondary transfer bias roller 19 to transfer a color toner image on the intermediate transfer belt 8 to the transfer sheet P. The printer unit 100 further includes a registration roller pair 28 that adjusts timing of conveying the transfer sheet P sent by a sheet feeding roller 27 to a secondary transfer nip where the intermediate transfer belt 8 faces the secondary transfer bias roller 19. The printer unit 100 further includes a fixing device 20 that fixes an unfixed toner image on the transfer sheet P to the upper part of the secondary transfer nip.

Toner containers 11 (1 1Y, 11M, 11C, and 11Bk) are arranged in the lower part of the sheet ejection tray 30 and the upper part of the intermediate transfer unit 10 within the printer unit 100. The toner container 11 for each color (11Y, 11M, 11C, or 11Bk) stores a toner for each color (yellow, magenta, cyan, and black) to be supplied to each developing device 5 (5Y, 5M, 5C, or 5Bk).

In the embodiment, image formation can also be made by charging, instead of yellow, magenta, cyan, and black toners, a white toner, a colorless toner, and a toner containing foamable particulate particles, and the like, to image forming units of yellow, magenta, cyan, and black.

In this manner, the image forming apparatus according to an embodiment includes an electrostatic latent image bearer, an electrostatic latent image forming device, a developing device, a transfer device, and a fixing device, wherein an adhesive medium and foamable particles are used for a developer. For the adhesive medium, a first toner including the toner described above is used. Formation of an image layer made of a color toner on the adhesive medium layer formed of the first toner and foamable particles allows strong fixing with the color toner being attached to the first toner, thus providing improved fixing performance of an image layer. Therefore, the image forming apparatus according to an embodiment can form a three-dimensional image having sufficient durability.

The image forming apparatus according to an embodiment allows a first toner of an adhesive medium and foamable particles to be not kneaded but mixed in a developer with each remaining present independently. Thus, the image forming apparatus according to an embodiment can form an image layer on an adhesive medium layer containing foamable particles, with keeping a first toner of an adhesive medium and the foamable particles independent, i.e., with leaving them unkneaded, and thereby provide strong fixing with a color toner being attached to the first toner, thus allowing improvement in fixing performance of the image layer. Therefore, the image forming apparatus according to an embodiment can form a three-dimensional image having sufficient durability even when a first toner of an adhesive medium contains foamable particles.

The image forming apparatus according to an embodiment can use an adhesive medium as a first toner that adheres foamable particles to a recording medium. Thus, the image forming apparatus according to an embodiment can adhere foamable particles to a recording medium via a first toner.

The image forming apparatus according to an embodiment can use a white toner or a colorless toner as a first toner. A white toner or a colorless toner can reduce change of coloration of an adhesive medium layer before and after foaming of foamable particles to a small extent. Therefore, the image forming apparatus according to an embodiment can reduce change of coloration of an adhesive medium layer to a small extent even when foaming foamable particles to form an image layer three-dimensionally, and thus prevent discoloration of the image layer.

The image forming apparatus according to an embodiment can use a colorless toner for a first toner. A colorless toner can reduce change of coloration of an adhesive medium layer before and after foaming of foamable particles to a small extent. Therefore, the image forming apparatus according to an embodiment can reduce change of coloration of an adhesive medium layer to a smaller extent even when foaming foamable particles to form an image layer three-dimensionally, and thus more certainly prevent discoloration of the image layer.

In the image forming apparatus according to an embodiment, a colorless toner can contain polyolefin and have an exothermic peak in the range of 40°C to 70°C at temperature dropping after first temperature rising by differential scanning calorimetry, and polyolefin can have no exothermic peak at temperature dropping after first temperature rising by differential scanning calorimetry and an exothermic peak in the range of 0°C to 30°C at second temperature rising. Printing with a developer containing a colorless toner could result in more improved fixability of a toner. In other words, a colorless toner can increase in wettability to polymer by containing polyolefin, and thus increase in wettability to an outer shell of a foamable particle made of polymer. This allows a colorless toner to increase in adhesiveness to an adherend, thus preventing loss of color reproducibility and color development intended to be exerted in an image layer disposed on the colorless toner. Therefore, the image forming apparatus according to an embodiment can maintain an image layer on the surface of a colorless toner with better color development and stability.

The image forming apparatus according to an embodiment can include a colorless toner containing maleate-modified polyolefin. Printing with a developer including a colorless toner containing maleate-modified polyolefin can result in more improved fixability of a toner. In other words, a colorless toner can contain maleate polyolefin having a polypropylene block in a main chain, thereby further increase wettability to an outer shell of a foamable particle and further improve adhesiveness to an adherend, thus further preventing loss of color reproducibility and color development intended to be exerted in an image layer disposed on the surface of the colorless toner. Therefore, the image forming apparatus according to an embodiment can maintain an image layer on the surface of a colorless toner with better color development and stability.

The image forming apparatus according to an embodiment can stack an adhesive medium layer and an image layer in this order onto a recording medium in accordance with the first order of image formation from the recording medium side. This enables the image forming apparatus according to an embodiment to exert high fixability of an image layer to a recording medium via an adhesive medium layer.

In other words, when foamable particles and a toner are kneaded to form a printing layer as a single layer, use of the foamable particle and the toner kneaded together and thus absence of an image layer on a foamable particle layer cause insufficient fixing of the foamable particles with the toner and deterioration in fixing performance. In the embodiment, even when a foamable particle layer containing foamable particles and an adhesive medium layer containing an adhesive medium are separately independently formed before stacking of an image layer, formation of the image layer on the adhesive medium layer allows improvement in fixability of the image layer.

The image forming apparatus according to an embodiment can stack an adhesive medium layer, a foamable particle layer, and an image layer in this order onto a recording medium in accordance with the second order of image formation from the recording medium side. This enables the image forming apparatus according to an embodiment to exert high fixability of an image layer to a recording medium via an adhesive medium layer and a foamable particle layer. In other words, the image forming apparatus according to an embodiment can improve fixability of an image layer to a recording medium even in developing three components of the image layer, an adhesive medium layer, and a foamable particle layer onto the recording medium. Therefore, in the image forming apparatus according to an embodiment, even when a foamable particle layer containing foamable particles and an adhesive medium layer containing an adhesive medium are separately independently formed before stacking of an image layer, formation of the image layer on the adhesive medium layer via foamable particle layer allows improvement in fixability of the image layer.

The image forming apparatus according to an embodiment allows an image layer to be a colored image layer. This enables the image forming apparatus according to an embodiment to perform color printing.

Examples

Hereinafter, an embodiment will be more particularly described with reference to Examples and Comparative Examples, but the embodiment is not limited to these Examples and Comparative Examples.

<Production of White Toner>

Example 1

The following row materials for a toner were preliminarily mixed using a Henschel mixer (FM20B, manufactured by Nippon Coke & Engineering Co., Ltd.), and then melt kneaded at a supply speed of the raw materials to a barrel of 16 kg/h at a screw temperature of 40°C and a kneading temperature of 100°C to 130°C (zone barrel temperature: 130°C in Z1 zone, 100°C in Z2 and Z3 zones) using an uniaxial kneading machine (co-kneader kneading machine, BUSS co-kneader "MDK46-11D", manufactured by Buss AG). The kneaded material thus obtained was cooled to room temperature, and then roughly pulverized to 200 $\mu$m to 300 $\mu$m using ROTOPLEX. Then, fine pulverization was performed using a counter jet mill (100AFG, manufactured by Hosokawa Micron Corporation) with appropriately adjusting pulverization air pressure so as to provide a mass mean particle diameter of (6.2 ± 0.3) $\mu$m. Subsequently, the finely pulverized kneaded material was classified using an airflow classifier (EJ-LABO, manufactured by Matsubo Corporation) with appropriately adjusting Louver opening so as to provide a mass mean particle diameter of (7.0 ± 0.2) $\mu$m and a ratio of mass mean particle diameter/number mean particle diameter of 1.20 or less, thereby obtaining toner base particles. Then, to 100 mass parts of the toner base particles, 1.0 mass part of an additive (HDK-2000®, manufactured by Clariant AG) and 1.0 mass part of an additive (H05TD®, manufactured by Clariant AG) were stirred and mixed using a Henschel mixer. In this manner, toner 1 of a white toner was produced. (Toner Raw Materials) Polyester resin 1 (EXL-101, manufactured by Sanyo Chemical Industries, Ltd.): 55 mass parts; polyester resin 2 (RN-290, manufactured by Kao Corporation): 20 mass parts; ester wax (WEP-5, manufactured by NOF Corporation): 5 mass parts; maleate-modified polyolefin 1 having a polypropylene block in a main chain (TOYOTAC-KH, manufactured by TOYOBO Co., Ltd., melting point: 80°C, weight average molecular weight: 90000): 20 mass parts; pigment (titanium oxide (PF-739, manufactured by Ishihara Sangyo Kaisha, Ltd.)):65 mass parts.

Maleate-modified polyolefin 1 is subjected to DSC and consequently confirmed to have no exothermic peak at temperature dropping after first temperature rising in DSC, and an exothermic peak in the range of 0°C to 30°C at second temperature rising.

Toner 1 thus obtained is subjected to DSC and consequently confirmed to have an exothermic peak in the range of 40°C to 70°C at temperature dropping after first temperature rising by DSC.

<Preparation of Colorless Toner>

Example 2

Colorless toner 2 was produced in the same manner as in Example 1 except for removing a pigment (titanium oxide (PF-739, manufactured by Ishihara Sangyo Kaisha, Ltd.)) from "Toner Raw Material" in Example 1.

<Production of Two-component Developer>

Production of Carrier

A mixture of the following carrier raw materials was dispersed for 20 minutes with a homomixer, to prepare a coat layer forming liquid. Using Mn ferrite particles having a mass mean particle diameter of 35 $\mu$m as a core material, the coat layer formation liquid thus obtained was applied using a fluidized bed coating apparatus under control at a fluidized tank temperature of 70°C for each batch so as to provide a mean film thickness of 0.20 $\mu$m on the surface of the core material, followed by drying. The carrier thus obtained was baked at 180°C for 2 hours in an electrical furnace, thereby providing Carrier A. (Carrier Raw Material) Silicone resin (organo straight silicone): 100 mass parts; toluene: 100 mass parts; $\gamma$-(2-aminoethyl)aminopropyl trimethoxysilane: 5 mass parts; and carbon black: 10 mass parts.

Production of Two-component Developer

Either of toner 1 or toner 2 and carrier A were uniformly mixed and charged at 48 rpm for 5 minutes using a turbula mixer (manufactured by Willy A Bachofen AG (WAB)), to produce two-component developer 1 and two-component developer 2, respectively. In regard to the blend ratio of a toner and carrier A, blending was made so as to provide a toner concentration of 7% by mass.

<Example 1-1>

Production of Developer

Two-component developer 3 was produced in the same manner as two-component developer 2 except for using a blend of thermofoamable particles 1 (DAIFORM H750D, mean particle diameter: 20$\mu$m, Kureha Corporation) so as to provide 2% by mass relative to toner 2 produced above.

Preparation of Image Forming Apparatus

To yellow, magenta, and cyan image forming units of an image forming apparatus (IM C6000, manufactured by Ricoh Co., Ltd.), corresponding IM C6000 developers were charged. Meanwhile, to a black image forming unit, two-component developer 3 was charged.

Assessment of Fixability

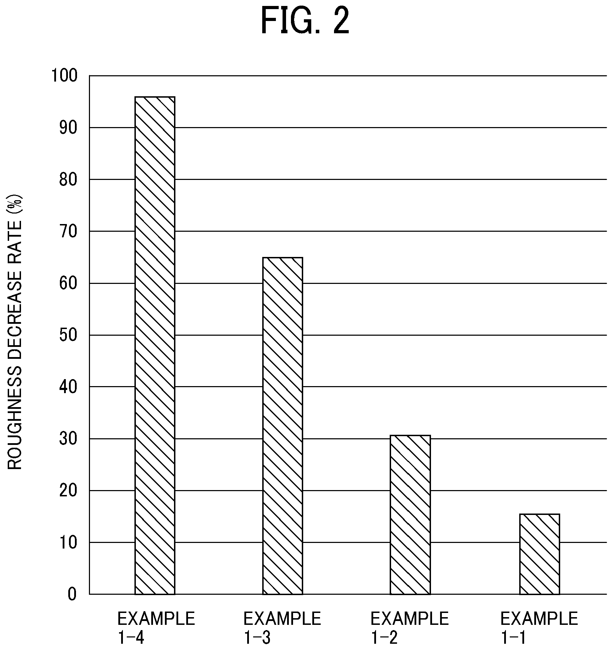

A recording medium was set to the prepared image forming apparatus (IM C6000, manufactured by Ricoh Co., Ltd.), and an image was printed on the recording medium. The image was formed from the recording medium side in order of a layer of toner 2 having foamable particles and an IM C6000 toner layer. The printed material was heated to foam the image, thereby providing a three-dimensional image. The foamed thermofoamable particles on the image was released by PRINTAC, and the decrease rate of surface roughness before and after release was calculated based on the following formula (I). Larger decrease rate of surface roughness indicates more decrease in toughness. The decrease rate of surface roughness before and after release was about 15.2%. Measurement results are presented in FIG. 2.

$$\text{Decrease rate of surface roughness (\%)} = ((\text{surface roughness after release - surface roughness before release})/ \text{ surface roughness before release}) \times 100 \dots \text{(I)}$$

Assessment of Color Difference

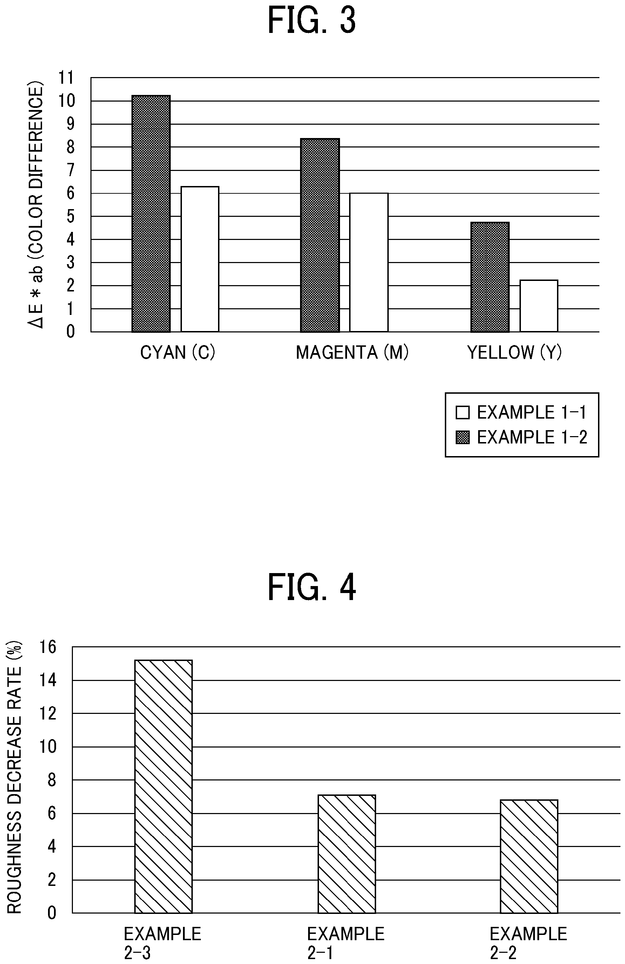

The values (L*, a*, b*) in the images before and after foaming were each measured in CMY with a spectral calorimeter (X-Rite eXact), and the color differences ($\Delta E^*ab$) of cyan (C), magenta (M), and yellow (Y) before and after foaming were calculated by the following formula (II). Measurement results are presented in FIG. 3.

$$\text{Color difference} = [(\Delta L^*)\,2 + (\Delta a^*)\,2 + (\Delta b^*)\,2]1/2 \dots \text{(II)}$$

<Example 1-2>

In Example 1-1, fixability and color difference of a developer were assessed in the same manner as in Example 1-1 except for changing toner 2 to toner 1. The decrease rate of surface roughness before and after release was about 30.2%. Measurement results of decrease rate of surface roughness are presented in FIG. 2, and measurement results of color difference are presented in FIG. 3.

<Example 1-4>

In Example 1-2, fixability of a developer was assessed in the same manner as in Example 1-2 except for changing thermofoamable particle 1 to thermofoamable particle 2 (DAIFORM H850D, mean particle diameter: 35 $\mu$m, manufactured by Kureha Corporation). The decrease rate of surface roughness before and after release was about 65.0%. Measurement results are presented in FIG. 2.

<Example 1-3>

In Example 1-1, fixability of a developer was assessed in the same manner as in Example 1-1 except for changing toner 2 to an IM C6000 toner, and thermofoamable particles 1 to thermofoamable particles 2 (DAIFORM H850D, mean particle diameter: 35 $\mu$m, manufactured by Kureha Corporation). The decrease rate of surface roughness before and after release was about 95.9%. Measurement results are presented in FIG. 2.

<Example 2-1>

To cyan and yellow image forming units in an image forming apparatus (IM C6000, manufactured by Ricoh Co., Ltd.), IM C6000 developers having the same coloration were charged, respectively. Additionally, to a magenta image forming unit, two-component developer 3 was charged.
The cyan, yellow and magenta image forming units were driven simultaneously to form an image layer on a recording medium in order of an IM C6000 toner layer, a layer of toner 2 having foamable particles, and an IM C6000 toner layer. Subsequently, the image was heated to foam the image, thereby providing a three-dimensional image. After formation of an image layer, the image layer was released by PRINTAC, and the decrease rate of surface roughness before and after release was calculated based on the formula (I) described above to assess fixability. The decrease rate of surface roughness before and after release was about 7.1%. Measurement results are presented in FIG. 4.

<Example 2-2>

In Example 2-1, yellow and magenta image forming units were driven simultaneously to form an image layer on a recording medium in order of a layer of toner 2 having foamable particles and an IM C6000 toner layer. Except for that, a process proceeds in the same manner as in Example 2-1. The decrease rate of surface roughness before and after release was about 6.8%. Measurement results are presented in FIG. 4.

<Example 2-3>

In Example 2-1, a process proceeds in the same manner as in Example 2-1 except for driving a magenta image forming unit to form an image layer of a layer of toner 2 having foamable particles, on a recording medium. The decrease rate of surface roughness before and after release was about 15.2%. Measurement results are presented in FIG. 4.

As depicted in FIG. 2, fixation of a toner is founded in each of Examples. Particularly, Examples 1-1 and 1-2 more significantly decreased in roughness decrease rate than Examples 1-3 and 1-4, confirming more improved fixability of the toners. Printing with a developer containing a colorless toner or a white toner and thermofoamable particles could result in improved fixability of a toner, and particularly, printing with a developer containing a colorless toner could result in more improved fixability of a toner. In other words, a colorless toner or a white toner could increase in wettability to polymer by containing maleate polyolefin having a polypropylene block in a main chain, thus increase in wettability to an outer shell of a thermofoamable particle made of polymer, and thereby effectively function as an adhesive medium for thermofoamable particles to one another and for thermofoamable particles to the surface of paper.

Moreover, as depicted in FIG. 3, it was confirmed that printing with a developer in Example 1-1 results in more improved color difference than printing with a developer in Example 1-2.

As depicted in FIG. 4, Examples 2-1 and 2-2 decreased in roughness decrease rate more than Examples 2-3, confirming improved fixability of the toners. Thus, an image layer could increase in fixability by arrangement of a regular colored toner layer between a recording medium and a layer of toner 2 having foamable particles, or arrangement of a regular colored toner layer on a layer of toner 2 having foamable particles. Accordingly, the image forming apparatus in each of Examples could provide a high-quality three-dimensional image with good durability by including a developer containing colorless toner or white toner and thermofoamable particles.

As mentioned above, embodiments have been described so far, but the embodiments are proposed as examples and do not limit the present disclosure. The embodiments can be performed in various other forms, and a variety of combinations, omissions, replacements, changes, and the like can be made in the range not departing from the spirit of the disclosure. These embodiments and variants thereof fall within the scope or spirit of the disclosure, and is encompassed in the claimed disclosure and equivalents thereof.

**Claims**

**1.**  An image forming apparatus, comprising:

  an electrostatic latent image bearer (1);
  an electrostatic latent image former (15, 30) configured to form an electrostatic latent image on the electrostatic latent image bearer (1);
  a developing device (5) configured to develop the electrostatic latent image with a developer to form a toner image;
  a transfer device (19) configured to transfer the toner image on a recording medium; and
  a fixing device (20) configured to fix the toner image on the recording medium,
  the developer comprising an adhesive medium and foamable particles.

**2.**  The image forming apparatus according to claim 1,
  wherein the adhesive medium and the foamable particles are not kneaded and are mixed independently of each other in the developer.

**3.**  The image forming apparatus according to claim 1 or 2,
  wherein the adhesive medium is a first toner to adhere the foamable particles to the recording medium.

**4.**  The image forming apparatus according to claim 3,
  wherein the first toner is a white toner or a colorless toner.

5. The image forming apparatus according to claim 4,
wherein the first toner is a colorless toner.

6. The image forming apparatus according to claim 5,

wherein the colorless toner comprises polyolefin,
wherein the colorless toner has an exothermic peak in a range of 40°C to 70°C at temperature dropping after first temperature rising by differential scanning calorimetry, and
wherein the polyolefin has no exothermic peak at the temperature dropping after the first temperature rising by the differential scanning calorimetry and has an exothermic peak in a range of 0°C to 30°C at second temperature rising.

7. The image forming apparatus according to claim 5 or 6,
wherein the colorless toner comprises maleate-modified polyolefin having a polypropylene block at least in a main chain.

8. The image forming apparatus according to any one of claims 1 to 7,
wherein an adhesive medium layer containing the adhesive medium, and an image layer containing a second toner used independently from the foamable particles are stacked onto the recording medium in accordance with a first order of image formation from a side of the recording medium, and wherein the first order is an order of the adhesive medium layer and the image layer.

9. The image forming apparatus according to any one of claims 1 to 7,

wherein an adhesive medium layer containing the adhesive medium, a foamable particle layer containing the foamable particles, and an image layer containing a second toner used independently from the foamable particles are stacked onto the recording medium in accordance with a second order of image formation from a side of the recording medium, and
wherein the second order is an order of the adhesive medium layer, the foamable particle layer, and the image layer.

10. The image forming apparatus according to claim 8 or 9,
wherein the second toner is a color toner comprising a colorant.

11. An image forming method comprising:

forming an electrostatic latent image on an electrostatic latent image bearer;
developing the electrostatic latent image with a developer and form a toner image;
transferring the toner image on a recording medium; and
fixing the toner image transferred on the recording medium, the developer comprising an adhesive medium and foamable particles.

# FIG. 1

500

11C(11) 11Bk(11)

3

4

25

30

11M(11)

11Y(11)

8

9Bk(9)

9Y(9)  9M(9)  9C(9)

1Y(1)  1M(1)  1C(1)

20

19

1Bk(1)

10

15Bk
(15)

100

15Y(15)  15M(15)  15C(15)

5Y(5) 6Y(6)  5M(5) 6M(6)  5C(5) 6C(6)  5Bk(5) 6Bk(6)

28

40

27

P

7

26

# FIG. 2

# FIG. 3

# FIG. 4

**EUROPEAN SEARCH REPORT**

Application Number

EP 23 15 8772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/037578 A1 (KURITA ATSUMI [JP] ET AL) 26 February 2004 (2004-02-26)<br>* paragraphs [0093], [0095], [0097], [0100], [0102], [0107]; figures 1,2,9(b) * | 1-11 | INV.<br>G03G15/22<br>G03G9/097<br>G03G9/087<br>B33Y10/00<br>B33Y70/10 |
| X | JP 2005 227523 A (FUJI XEROX CO LTD) 25 August 2005 (2005-08-25)<br>* paragraphs [0001], [0002], [0009], [0010], [0011], [0018], [0019], [0075], [0076], [0086] * | 1-11 | |
| X | JP 2004 205562 A (FUJI XEROX CO LTD) 22 July 2004 (2004-07-22)<br>* paragraphs [0001], [0003], [1226], [0027], [0028], [0029], [0031], [0040], [0041], [0044]; claim 1 * | 1-11 | |
| X | US 2019/250527 A1 (WASHINO YUSUKE [JP]) 15 August 2019 (2019-08-15)<br>* paragraphs [0045], [0068], [0078], [0176]; claim 1 * | 1-11 | TECHNICAL FIELDS SEARCHED (IPC) |
| X | JP 2005 004142 A (FUJI XEROX CO LTD) 6 January 2005 (2005-01-06)<br>* paragraphs [0003], [0007], [0009], [0010], [0011], [0013], [0125] * | 1-11 | G03G<br>B33Y<br>B29C |
| X | EP 1 391 791 A1 (FUJI XEROX CO LTD [JP]) 25 February 2004 (2004-02-25)<br>* paragraphs [0002], [0004], [0008], [0009], [0014], [0035], [0125], [0126] *<br>* paragraph [0130]; claims 1,3 * | 1-11 | |

-/--

The present search report has been drawn up for all claims

| Place of search | Date of completion of the search | Examiner |
|---|---|---|
| The Hague | 21 June 2023 | Vogt, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 23 15 8772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 077926 A (FUJI XEROX CO LTD) 11 March 2004 (2004-03-11) * paragraphs [0003], [0004], [0019], [0156], [0199], [0200], [0201]; claims 1,2 * | 1-11 | |

TECHNICAL FIELDS
SEARCHED (IPC)

The present search report has been drawn up for all claims

| Place of search | Date of completion of the search | Examiner |
|---|---|---|
| The Hague | 21 June 2023 | Vogt, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 4 242 748 A1**

## ANNEX TO THE EUROPEAN SEARCH REPORT
## ON EUROPEAN PATENT APPLICATION NO.

EP 23 15 8772

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2023

| Patent document cited in search report | | Publication date | Patent family member(s) | | Publication date |
|---|---|---|---|---|---|
| US 2004037578 | A1 | 26-02-2004 | CN | 1477453 A | 25-02-2004 |
| | | | JP | 2004077933 A | 11-03-2004 |
| | | | US | 2004037578 A1 | 26-02-2004 |
| JP 2005227523 | A | 25-08-2005 | NONE | | |
| JP 2004205562 | A | 22-07-2004 | NONE | | |
| US 2019250527 | A1 | 15-08-2019 | JP | 6806102 B2 | 06-01-2021 |
| | | | JP | 2019139092 A | 22-08-2019 |
| | | | US | 2019250527 A1 | 15-08-2019 |
| JP 2005004142 | A | 06-01-2005 | NONE | | |
| EP 1391791 | A1 | 25-02-2004 | CN | 1477454 A | 25-02-2004 |
| | | | EP | 1391791 A1 | 25-02-2004 |
| | | | JP | 2004077931 A | 11-03-2004 |
| | | | US | 2004037573 A1 | 26-02-2004 |
| JP 2004077926 | A | 11-03-2004 | NONE | | |

EPO FORM P0459

For more details about this annex : see Official Journal of the European Patent Office, No. 12/82

**EP 4 242 748 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009075400 A